# EUROPEAN PATENT SPECIFICATION

(11) **EP 1 513 369 B1**
(45) Date of publication and mention of the grant of the patent: **14.11.2007**
(21) Application number: 04020857.1
(22) Date of filing: 02.09.2004
(51) Int. Cl.: H04R 7/00, B32B 27/36

(54) **Speaker diaphragm and speaker using the diaphragm**
Lautsprechermembran und Lautsprecher mit Anwendung einer solchen Membran
Membrane pour haut-parleur et haut-parleur utilisant ladite membrane

(30) Priority: 02.09.2003 JP 2003310242
(43) Date of publication of application: 09.03.2005
(73) Proprietor: Pioneer Corporation, Meguro-ku, Tokyo (JP); Tohoku Pioneer Corporation, Tendo-shi, Yamagata (JP)
(72) Inventor: Takayama, Koji, Tohoku Pioneer Corporation, Tendo-shi Yamagata (JP); Hachiya, Satoshi, Tohoku Pioneer Corporation, Tendo-shi Yamagata (JP)
(74) Representative: Reinhard - Skuhra - Weise & Partner

(56) References cited:
- EP-A- 0 303 173
- EP-A- 1 429 582
- US-A1- 2003 223 613
- PATENT ABSTRACTS OF JAPAN vol. 2003, no. 11, 5 November 2003 (2003-11-05) & JP 2003 204593 A (MINEBEA CO LTD), 18 July 2003 (2003-07-18)
- PATENT ABSTRACTS OF JAPAN vol. 2003, no. 12, 5 December 2003 (2003-12-05) & JP 2004 193716 A (ONKYO CORP), 8 July 2004 (2004-07-08)

## Description

### BACKGROUND OF THE INVENTION

### 1. Field of the invention

The present invention relates to a speaker diaphragm used for various kinds of acoustic apparatuses or information communication apparatuses and a speaker having the diaphragm.

### 2. Description of the Related Art

A speaker is employed as sound outputting means in various kinds of acoustic apparatuses or information communication apparatuses. Generally, if a sound signal is passed through a voice coil, the voice coil vibrates a cone that is a diaphragm so that the sound is outputted.

The material of the cone may be a natural fiber, a chemical fiber, a synthetic material synthesized of them, and the synthetic material impregnated with a solution of acrylic resin or polyurethane resin.

A speaker having a cone in which a foam resin sheet, an elastomer or non-woven fabric is laminated on a base substance made of polyethylene naphthalate resin is well known (e.g., refer to JP-A-2001-204094).

Intermediate document EP-A-1 429 582 refers to a loudspeaker diaphragm including a base layer of cotton fabric and a PEN fiber sheet both impregnated and bonded by resin. Document JP 2003-204593 A refers to a PEN fiber resin impregnated loudspeaker diaphragm.

By the way, the speaker is formed by laminating the foam resin sheet, elastomer or non-woven fabric having a high internal loss on the base substance made of polyethylene naphthalate resin to reduce resonance and realize high sound quality. In recent years, there is a demand for reproducing the sound of high quality extremely nearer to the natural sound, for which the speaker comprises the cone made of material with less resonance.

### SUMMARY OF THE INVENTION

The present invention has been made in view of the above circumstances. It is an object of the invention to provide a speaker diaphragm according to claim 1 capable of reproducing the sound of high quality extremely nearer to the natural sound and a speaker according to claim 2 having the diaphragm.

### BRIEF DESCRIPTION OF THE DRAWINGS

Fig. 1 is a cross-sectional viewof a speaker for explaining a speaker structure having a speaker diaphragm according to an embodiment of the invention; and
Fig. 2 is a cross-sectional view of a main cone for explaining a diaphragm structure provided on the speaker.

### DETAILED DESCRIPTION OF THE PREFFERED EMBODIMENTS

A speaker diaphragm according to an embodiment of the present invention will be described below.

The diaphragm of this embodiment is employed for a speaker for outputting the sound by vibrations of a voice coil, and includes a base substance and a PEN (polyethylene naphthalate) fiber sheet laminated on the base substance. The PEN fiber sheet is formed like a sheet by impregnating the polyethylene naphthalate fiber with resin.

The speaker diaphragm according to this embodiment has a multiple structure in which the PEN fiber sheet is bonded on the base substance, whereby making it possible to increase the internal loss while keeping the good rigidity, and greatly reduce the unwanted resonance to reproduce the sound of high quality nearer to the natural sound. Also, if the density or thickness of the polyethylene naphthalate fiber contained in the PEN fiber sheet, as well as the thickness of resin are changed, the output characteristics can be adjusted according to the requirements, whereby the diaphragm can be employed for a wide range of uses.

The speaker diaphragm of this embodiment may have the PEN fiber sheet bonded on the base substance by a resin film including thermoplastic resin. Such speaker diaphragm has a high rigidity and can produce a natural sound quality, because the base substance and the PEN fiber sheet are strongly integrated by the resin film including a thermoplastic resin.

Moreover, the speaker diaphragm of this embodiment may have the PEN fiber sheet bonded on the base substance by adhesives. Such speaker diaphragm has a high rigidity and can produce a natural sound quality, because the base substance and the PEN fiber sheet are strongly integrated by the adhesives.

The speaker diaphragm of this embodiment may have the base substance that is composed of paper material blended with aramid fiber. Such speaker diaphragm can produce a higher sound quality, because the base substance including a paper material blended with an aramid fiber has a higher elastic modulus and internal loss.

The speaker having the speaker diaphragm of this embodiment has the diaphragm connected to the voice coil on the inner circumferential side, and produces the sound when the diaphragm is vibrated by this voice coil. And the diaphragm includes the base substance and the PEN fiber sheet laminated on the base substance. The PEN fiber sheet is formed like a sheet by impregnating the polyethylene naphthalate fiber with resin.

The speaker of this embodiment can increases the internal loss while keeping the good rigidity, greatly reducing the unwanted resonance, and reproduce the sound of high quality nearer to natural sound, because the diaphragm has a multiple structure in which the PEN fiber sheet is bonded on the base substrate.

### [Examples]

The diaphragm and the speaker having the diaphragm according to this embodiment will be describedbelowby referring examples with reference to the accompanying drawings.

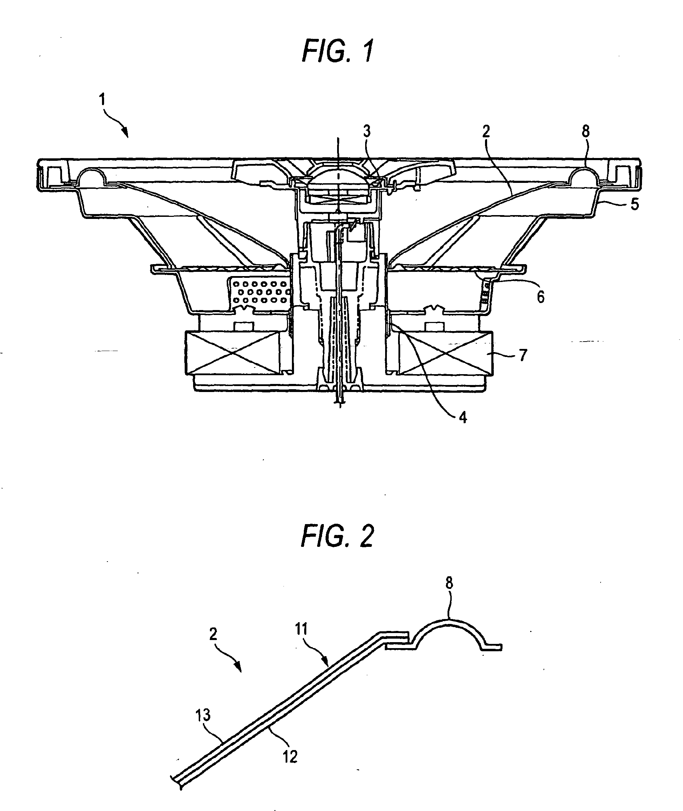

Fig. 1 is a cross-sectional view of the speaker according to this embodiment.

As shown in Fig. 1, this speaker 1 is a double cone type having a main cone 2 and a sub-cone 3 for high frequency reproduction provided inside a main cone 2. The main cone 2 and the sub-cone 3 are vibrated as the diaphragm to produce the sound. The speaker 1 of the double cone type improves the high frequency characteristics compared with the one cone speaker and can reproduce the sound in a wide band.

In this speaker 1, the voice coil 4 is held by a damper 6 attached to a frame 5.

The main cone 2 is a neck portion attached to the voice coil 4 on their inner circumferential side. And the main cone 2 is provided with an edge 8 connected to the frame 5 on their outer circumferential side.

The main cone 2 and the sub-cone 3 for the speaker 1 of the above structure will be detailed below taking the main cone 2 as an example.

Fig. 2 is a cross-sectional view of a part of the main cone 2.

As shown in Fig. 2, a cone substance 11 constituting the main cone 2 has a multi-layer structure having the base substrate like a sheet and the PEN (polyethylene naphthalate) fiber sheet 13 laminated on the surface of this base substance 12.

The base substance 12 supports the PEN fiber sheet 13, and includes a paper material, a resin material or a metal material. Preferably, a paper material is blended with an aramid fiber, in the thickness being about 0.20mm. As an aramid fiber blended into paper material, Kevlar including para aromatic polyamide or Cornex including meta aromatic polyamide is usable.

The PEN fiber sheet 13 is formed like a sheet by impregnating PEN fiber with a resin.

PEN fiber included in this PEN fiber sheet 13 is made in thickness of about 0.25mm by weaving resin yarn habing a size of about 1000 denier. The pen fiber is processed into a sheet-state by impregnating PEN fiber with resin of about 15 to 20% in weight based on the total weight of the PEN fiber to produce the PEN fiber sheet 13.

As the resin impregnated to the PEN fiber, a thermoplastic or thermosetting resin may be employed. Examples of such resin may include thermosetting resins such as phenol resin, epoxy resin, melamine resin, vinyl ester resin, urethane resin, unsaturated polyester resin, and ultraviolet curable resin, and thermoplastic resins such as polypropylene, polyethylene, nylon, polyethylene terephthalate, polybutylene terephthalate, polycarbonate, polyimide and polyether imide.

And the PEN fiber sheet 13 is bonded on the surface of the base substance 12 using a thermoplastic rein film or by adhesives to produce the cone substance 11.

To bond the PEN fiber sheet 13 on the base substance 12 using the thermoplastic resin film, the film is carried between the base substance 12 and the PEN fiber sheet 13 and subjected the moloding pressure of about 3kg/cm² at for about 10 seconds at temperatures from 170 to 200°C In this way, the base substance 12 and the PEN fiber sheet 13 are pressed together via the thermoplastic resin film softened by heat and integrated.

And a predetermined pressure is applied to the cone substance 11 having the PEN fiber sheet 13 bonded with the base substance 12 by the mold to produce a predetermined shape of main cone 2.

The sub-cone 3 is molded from the cone substance 11 with the PEN fiber sheet 13 bonded on the base substance 12, like the main-cone 2.

And with the cone substance 11 for the speaker and the speaker 1 having the cone substance 11, the internal loss is increased while the good rigidity is kept, and the unwanted resonance is greatly reduced to reproduce the sound of high quality nearer to the natural sound, because the cone substance 11 has the multiple structure in which the PEN fiber sheet 13 is bonded on the base substance 12.

Further, the output characteristics can be adjusted according to a great demand or requirements of the customer by changing the density and thickness of a polyethylene naphthalate fiber contained in the PEN fiber sheet 13 and the size of resin yarn, whereby the PEN fiber sheet 13 is usable in a wide range of uses.

Since the base substance 12 is preferably includes a paper material blended with an aramid fiber, the elastic modulus and internal loss of the base substance are improved. Thereby, the sound quality is further enhanced.

The base substance 12 is not limited to the paper material, but may be a resin sheet containing polyethylene naphthalate, polycarbonate or polyimide resin, or a metal sheet of titanium or aluminum, for example.

Though in the above example, the PEN fiber sheet 13 is bonded on the base substance 12 by the film containing thermoplastic resin, the PEN fiber sheet 13 may be bonded on the base substance 12 simply by adhesives.

## Claims

1. A speaker diaphragm outputting a voice with vibrations of a voice coil, comprising:
a base substance; and
a polyethylene naphthalate fiber sheet laminated on the base substance,
wherein the polyethylene naphthalate fiber sheet includes a polyethylene naphthalate fiber impregnated with a resin and is formed like a sheet, and
the polyethylene naphthalate fiber sheet and the base substance are bonded by a resin film or by an adhesive interposed there between, and
the base substance comprises a paper material blended with an aramid fiber.

2. A speaker comprising:
a voice coil; and
a diaphragm which is connected to the voice coil on an inner circumferential of the diaphragm and is vibrated by the voice coil to output sound, wherein the diaphragm comprises:
a base substance; and
a polyethylene naphthalate fiber sheet laminated on the base substance,
wherein the polyethylene naphthalate fiber sheet includes a polyethylene naphthalate fiber impregnated with a resin and is formed like a sheet , and the polyethylene naphtalate fiber sheet and the base substance are bonded by a resin film or by an adhesive interposed there between, and the base substance comprises a paper material blended with an aramid fiber.

## Patentansprüche

1. Lautsprecherdiaphragma, das eine Stimme mit Vibrationen einer Schwingspule ausgibt, umfassend:
eine Basissubstanz; und
eine Polyethylennaphthalat-Faserfolie, die auf die Basissubstanz laminiert ist,
wobei die Polyethylennaphthalat-Faserfolie eine mit einem Harz imprägnierte Polyethylennaphthalatfaser umfasst und wie eine Folie geformt ist, und
die Polyethylennaphthalat-Faserfolie und die Basissubstanz durch einen Harzfilm oder durch einen dazwischen liegenden Klebstoff verklebt sind, und
die Basissubstanz ein mit einer Aramidfaser gemischtes Papiermaterial einschließt.

2. Lautsprecher, umfassend:
einen Schwingspule; und
ein Diaphragma, das mit der Schwingspule auf einem Innenumfang des Diaphragmas verbunden ist und durch die Schwingspule in Schwingung versetzt wird, um einen Ton auszugeben, wobei das Diaphragma umfasst:
eine Basissubstanz; und
eine auf die Basissubstanz laminierte Polyethylennaphthalat-Faserfolie
wobei die Polyethylennaphthalat-Faserfolie eine mit einem Harz imprägnierte Polyethylennaphthtalatfaser umfasst und wie eine Folie geformt ist, und
die Polyethylennaphthalat-Faserfolie und die Basissubstanz durch einen Harzfilm oder durch einen dazwischen liegenden Klebstoff verklebt sind, und
die Basissubstanz ein mit einer Aramidfaser gemischtes Papiermaterial einschließt.

## Revendications

1. Membrane pour haut-parleur délivrant une voix avec des vibrations d'une bobine acoustique, comprenant:
une substance de base; et
une feuille en fibre de polyéthylène naphthalate laminée sur la substance de base,
dans laquelle la feuille en fibre de polyéthylène naphthalate comprend une fibre de polyéthylène naphthalate imprégnée avec une résine et est réalisée sous la forme d'une feuille ; et
la feuille en fibre de polyéthylène naphthalate et la substance de base sont collées par un film en résine ou par un adhésif intercalé entre elles ; et
la substance de base comprend un matériau en papier mélangé avec une fibre aramide.

2. Un haut-parleur comprenant:
une bobine acoustique ; et
une membrane qui est connectée à la bobine acoustique sur une surface de circonférence intérieure de la membrane, et qui est amenée à vibrer par la bobine acoustique de façon à délivrer en sortie des sons, dans lequel la membrane comprend
une substance de base ; et
une feuille en fibres de polyéthylène naphthalate laminée sur la substance de base,
dans laquelle la feuille en fibre de polyéthylène naphthalate comprend une fibre de polyéthylène naphthalate imprégnée avec une résine et est réalisée sous la forme d'une feuille ; et
la feuille en fibre de polyéthylène naphthalate et la substance de base sont collées par un film en résine ou par un adhésif intercalé entre elles, et la substance de base comprend un matériau en papier mélangé avec une fibre aramide.
